# EUROPEAN PATENT SPECIFICATION

(11) **EP 3 463 963 B1**
(45) Date of publication and mention of the grant of the patent: **20.04.2022**
(21) Application number: 17728609.3
(22) Date of filing: 01.06.2017
(51) Int. Cl.: B60L 7/18, B60L 7/16, B60L 53/80, B60L 58/12, B60L 58/10, B60L 58/18, B60L 58/21

(54) **ELECTRIC VEHICLE BATTERY MANAGEMENT APPARATUS AND METHOD**
ELEKTROFAHRZEUGBATTERIEVERWALTUNGSVORRICHTUNG UND -VERFAHREN
APPAREIL ET PROCÉDÉ DE GESTION DE BATTERIE DE VÉHICULE ÉLECTRIQUE

(30) Priority: 02.06.2016 GB 201609685
(43) Date of publication of application: 10.04.2019
(73) Proprietor: Arrival Limited, Banbury OX16 2SN (GB)
(72) Inventor: LESZCZYNSKI, Mirek, Banbury Oxfordshire OX16 2SN (GB)
(74) Representative: Korenberg, Alexander Tal
(86) International application number: PCT/GB2017/051565
(87) International publication number: WO 2017/207997

(56) References cited:
- EP-A2- 0 083 557
- WO-A1-2015/021998
- US-A- 5 941 328
- US-A1- 2003 107 352
- US-A1- 2003 122 512
- US-A1- 2004 238 244
- US-A1- 2013 221 897

## Description

### Technical Field

The present invention relates to a battery management apparatus and method for an electric vehicle. In particular, the present invention relates to an apparatus and method for managing two or more batteries in an electric vehicle.

### Background

The drive for more fuel efficient and environmentally friendly transport solutions is seeing an increasing level of development in the field of electric vehicles. Such vehicles include not only passenger vehicles for personal transport, but also commercial vehicles such as buses and trucks. Such electric vehicles (EVs) include pure battery electric vehicles (BEVs) powered by batteries alone, and range extender electric vehicles (REEVs) which also include a small internal combustion engine (ICE) to generate electricity to supplement the battery power source. All such EVs include battery packs for supplying electrical power to the electric drive motor(s). Such battery packs typically comprise a number of battery cells connected in series.

In some electric vehicles, multiple battery packs are electrically connected in parallel to provide power to the electric drive motor(s). However, problems can arise when battery packs with different output voltages are connected in parallel, making it difficult to replace individual battery packs. For example, connecting batteries with different output voltages in parallel can result in a current surge from one battery to the other. Vehicle batteries connected in parallel is shown in the prior art document US-A-2003107352.

The invention is made in this context.

### Summary of the Invention

According to a first aspect of the present invention, there is provided a battery management apparatus for an electric vehicle, the electric vehicle comprising a front electric drivetrain comprising one or more electric motors, a rear electric drivetrain comprising one or more electric motors, first and second batteries configured to supply electrical power to the front and rear electric drivetrains, a first regenerative braking system configured to generate electrical power for charging the first battery, and a second regenerative braking system configured to generate electrical power for charging the second battery, the battery management apparatus comprising: power distribution means for controlling a flow of electrical power between the first and second batteries and the front and rear electric drivetrains; voltage monitoring means for monitoring an output voltage of the first battery and an output voltage of the second battery; and battery control means for controlling the power distribution means to electrically connect the first and second batteries in parallel to supply electrical power to both the front and rear electric drivetrains in response to a difference between the output voltages of the first and second batteries being less than a threshold, and to separately connect the first battery to the rear electric drivetrain and the second battery to the front electric drivetrain in response to the difference between the output voltages being greater than the threshold, wherein in response to the difference between the output voltages of the first and second batteries being greater than the threshold, the battery control means is configured to change a relative amount of electrical power generated by the first and second regenerative braking systems so as to supply more electrical power to the one of the first and second batteries having the lower output voltage, without substantially changing the total amount of electrical power generated by the first and second regenerative braking systems under braking of the electric vehicle.

In some embodiments according to the first aspect, in response to the difference between the output voltages of the first and second batteries being greater than the threshold, the battery control means is configured to control the power distribution means to charge or discharge the first battery and/or the second battery to reduce the difference between the output voltages, and to electrically connect the first and second batteries in parallel in response to the difference between the output voltages falling below the threshold.

In some embodiments according to the first aspect, the first regenerative braking system may be configured to generate electrical power from the front wheels under braking of the electric vehicle, and the second regenerative braking system may be configured to generate electrical power from the rear wheels under braking of the electric vehicle.

In some embodiments according to the first aspect, the battery control means is configured to separately connect the first battery and the second battery to the rear and front electric drivetrains respectively so that only one of the first and second batteries supplies electrical power to the front and rear electric drivetrains at any time.

According to a second aspect of the present invention, there is provided an electric vehicle comprising: a front electric drivetrain comprising one or more electric motors; a rear electric drivetrain (101) comprising one or more electric motors; first and second batteries configured to supply electrical power to the front and rear electric drivetrains; and battery management apparatus according to the first aspect.

In some embodiments according to the second aspect, the electric vehicle further comprises a range extender unit comprising an internal combustion engine configured to generate electrical power, and the battery control means is configured to determine which of the first and second batteries currently provides the lower output voltage out of the first and second batteries, and to control the power distribution means to charge said one of the first and second batteries from the range extender unit to increase the output voltage of said one of the first and second batteries.

In some embodiments according to the second aspect, the electric vehicle further comprises the first and second regenerative braking systems. In some embodiments according to the second aspect, the generating means may comprise both the range extender unit and the first and second regenerative braking systems.

According to a third aspect of the present invention, there is provided a battery management method of an electric vehicle comprising a front electric drivetrain comprising one or more electric motors, a rear electric drivetrain comprising one or more electric motors, first and second batteries configured to supply electrical power to the rear and front electric drivetrains respectively a first regenerative braking system configured to generate electrical power for charging the first battery, and a second regenerative braking system configured to generate electrical power for charging the second battery, the method comprising: monitoring an output voltage of the first battery and an output voltage of the second battery; electrically connecting the first and second batteries in parallel to supply electrical power to both the front and rear electric drivetrains in response to a difference between the output voltages of the first and second batteries being less than a threshold; and separately connecting the first battery to the rear electric drivetrain and the second battery to the front electric drivetrain in response to the difference between the output voltages being greater than the threshold, wherein in response to the difference between the output voltages of the first and second batteries being greater than the threshold, the method further comprises: changing a relative amount of electrical power generated by the first and second regenerative braking systems so as to supply more electrical power to the one of the first and second batteries having the lower output voltage, without substantially changing the total amount of electrical power generated by the first and second regenerative braking systems under braking of the electric vehicle.

In some embodiments according to the third aspect, the battery management method further comprises: in response to the difference between the output voltages of the first and second batteries being greater than the threshold, charging or discharging the first battery and/or the second battery to reduce the difference between the output voltages; and electrically connecting the first and second batteries in parallel in response to the difference between the output voltages falling below the threshold.

In some embodiments according to the third aspect, the first battery and the second battery are separately connected to the rear and front electric drivetrains respectively so that only one of the first and second batteries supplies electrical power to the front and rear electric drivetrains at any time.

According to a fourth aspect of the present invention, there is provided a program which, when executed by a processing unit, causes the processing unit to perform a method according to the third aspect.

According to a fifth aspect of the present invention, there is provided a non-volatile computer readable storage medium adapted to store computer program instructions which, when executed, perform a method according to the third aspect.

### Brief Description of the Drawings

Embodiments of the present invention will now be described, by way of example only, with reference to the accompanying drawings, in which:
Figure 1 schematically illustrates an electric vehicle and battery management apparatus, according to an embodiment of the present invention;
Figure 2 schematically illustrates a battery management apparatus, according to an embodiment of the present invention;
Figure 3 is a flowchart showing a battery management method, according to an embodiment of the present invention;
Figure 4 is a flowchart showing a method of charging or discharging a battery to reduce the voltage difference between two batteries, according to an embodiment of the present invention; and
Figure 5 is a graph plotting the output voltage of a battery as a function of the state of charge (SOC), according to an embodiment of the present invention.

### Detailed Description

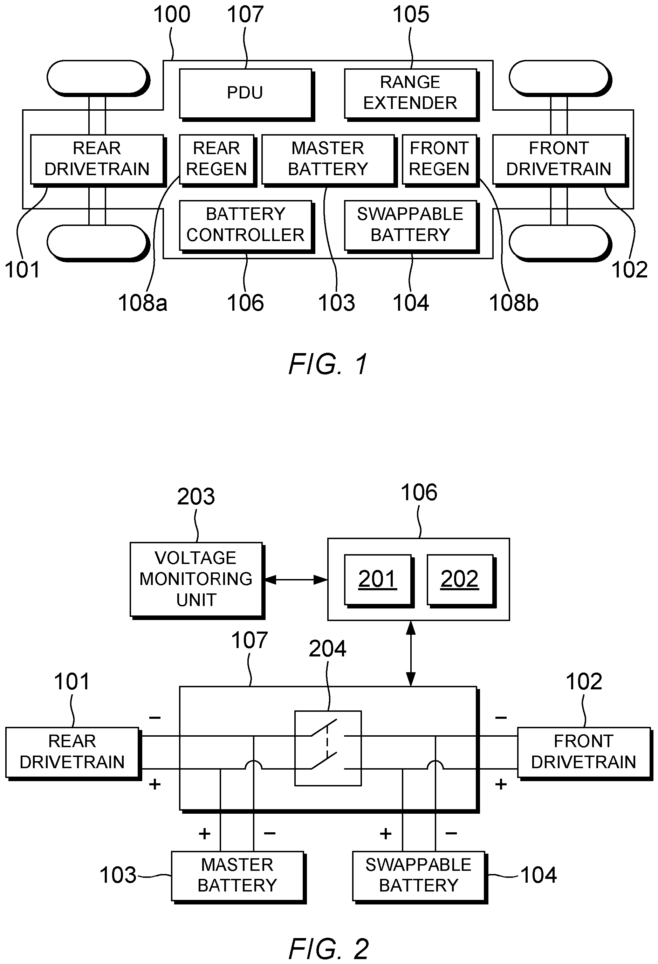

Referring now to Fig. 1, an electric vehicle 100 according to an embodiment of the present invention comprises an electric drivetrain 101, 102 for converting electrical power into mechanical power to drive the electric vehicle 100. The electric vehicle 100 further comprises a master battery 103 configured to supply electrical power to the electric drivetrain, and two alternate power sources in the form of a swappable second battery 104 and a range extender unit 105. The second battery 104 may be referred to as a slave battery. Finally, in the present embodiment the electric vehicle 100 further comprises a battery control unit 106 and power distribution unit 107.

The range extender unit 105 can be any suitable generator configured to generate electrical power, for example, a petrol or diesel combustion engine arranged to drive an electric generator. The range extender 105 can extend the operating range of the electric vehicle 100 beyond the limit that would be possible when operating on battery power alone. Like the master battery 103, in the present embodiment both alternate power sources 104, 105 are also configured to supply electrical power to the electric drivetrain. In some embodiments, a range extender 105 may be mechanically coupled to the wheels of the electric vehicle 100 so as to drive the wheels directly, rather than supplying electrical power to the motors of the electric drivetrain 101, 102.

In the present embodiment, both the second battery 104 and the range extender 105 are configured to be removed and swapped with a replacement battery. That is, one or both of the second battery 104 and the range extender 105 can be removed and replaced with another battery. For example, the range extender 105 may be removed and replaced with the replacement battery when the electric vehicle 100 is to be operated in an area with strict emission controls, where use of the range extender 105 would not be permitted. The second battery 105 may be swapped with the replacement battery when the second battery 105 is discharged, or is no longer operating correctly.

In general, the electric drivetrain of the electric vehicle 100 can include one or more electric motors. In the present embodiment the electric vehicle 100 is provided with separate front 102 and rear 101 electric drivetrains, each of which includes two electric motors. In this embodiment, each electric motor is arranged to drive one wheel of the electric vehicle 100. However, other arrangements are possible in other embodiments of the invention. For example, the front and/or rear drivetrains may each only include a single electric motor, or may include more than two electric motors.

In the present embodiment the electric vehicle 100 further comprise first and second regenerative braking systems 108a, 108b that are configured to generate electrical power for charging the master battery 103 and/or the slave battery 104 under braking of the electric vehicle 100. Together, the range extender unit 105 and the first and second regenerative braking systems 108a, 108b can collectively be referred to as generating means, that is, means for generating electrical power that can be used to charge the master battery 103 and /or the slave battery 104.

In the present embodiment, the regenerative braking system comprises a plurality of subsystems configured to generate electrical power from different parts of the electric drivetrain. In the present embodiment the regenerative braking system 108a, 108b includes a rear regenerative braking system 108a configured to generate electrical power for charging the master battery 103 from the rear wheels of the electric vehicle 100, and further includes a front regenerative braking system 108b configured to generate electrical power for charging the slave battery 104 from the front wheels of the electric vehicle 100. It should be understood that the separation of regenerative braking between front and rear wheels as described here is merely exemplary, and other arrangements are possible in other embodiments. For example, in an articulated lorry comprising multiple rear axles, the master battery may be charged from a different one of the rear axles via regenerative braking.

The battery control unit 106 can control the power distribution unit 107 to manage the flow of electrical power between the master battery 103, the alternate power sources 104, 105, the electric drivetrain 101, 102, and the first and second regenerative braking systems 108a, 108b. For example, the power distribution unit 107 may include an arrangement of electrical switches that can be configured to electrically connect each of the master battery 103, second battery 104, and range extender unit 105 to one or both of the front and rear drivetrains 101, 102. This allows each of the front and rear drivetrains 101, 102 to be driven by one or more of the available power sources 103, 104, 105, in any combination. When the same drivetrain is powered by both the master battery 103 and the swappable second 104, both batteries 103, 104 are electrically connected in parallel. Alternatively, the electric vehicle can be operated in a mode in which the master battery 103 supplies electrical power to one of the front and rear drivetrains 101, 102 and the second battery 104 supplies electrical power to the other of the front and rear drivetrains 101, 102, so that the two batteries 103, 104 are not electrically connected to each other.

Furthermore, the power distribution unit 107 can be controlled to electrically connect one of the batteries 103, 104 to the other battery 103, 104 and/or the range extender unit 105, to charge said one of the batteries 103, 104 from the other battery 103, 104 and/or from the range extender unit 105. By controlling the power distribution unit 107, the battery control unit 106 can independently charge or discharge either of the master battery 103 and the second battery 104.

An example of the power distribution unit 107 is illustrated schematically in Fig. 2, according to an embodiment of the present invention. In this embodiment, the positive and negative terminals of the master battery 103 are respectively connected to positive and negative terminals of the rear drivetrain 101, and positive and negative terminals of the slave battery 104 are respectively connected to positive and negative terminals of the front drivetrain 102. The power distribution unit 107 comprises an electrical switch 204 that is configured to be switchable to open or close an electrical connection between the positive terminals of the master battery 103 and the slave battery 104, and to simultaneously open and close an electrical connection between the negative terminals of the master battery 103 and the slave battery 104. When the switch 204 is open, the master battery 103 and the slave battery 104 are connected separately to the rear and front drivetrains 101, 102 respectively. When the switch 204 is closed, the master battery 103 and the slave battery 104 are electrically connected in parallel so that each battery 103, 104 supplies power to both the front and rear drivetrains 101, 102.

In another embodiment, independently controllable switches may be provided for the positive and negative connections between the master battery 103 and the slave battery 104. Furthermore, in some embodiments the negative terminals of both the master battery 103 and the slave battery 104 may be connected to a common ground, and only the positive connection between the batteries 103, 104 may be switched.

In an electrical circuit, power losses due to electrical resistance increase with the current in a non-linear fashion. When an electric vehicle 100 is powered by multiple batteries, as in the example shown in Fig. 1, it is more efficient to connect the batteries in parallel since this reduces the current flowing through each battery, thereby reducing the power loss. However, when two batteries in the electric vehicle 100 have different output voltages, electrically connecting the batteries in parallel can result in current flowing directly from one battery to another without passing through a load. This can result in rapid overheating which may damage the batteries or other components of the vehicle. In the worst case scenario, one or both of the batteries may ignite.

In the present embodiment, a battery management apparatus is provided to manage two or more batteries in the electric vehicle 100. For example, the battery management apparatus may be used to manage the master battery 103, the swappable slave battery 104, and/or a replacement battery installed in place of either the swappable slave battery 104 or the range extender unit 105. The battery management apparatus is illustrated in more detail in Fig. 2. In the present embodiment, the battery management apparatus comprises the power distribution unit 107, a voltage monitoring unit 203, and the battery control unit 106.

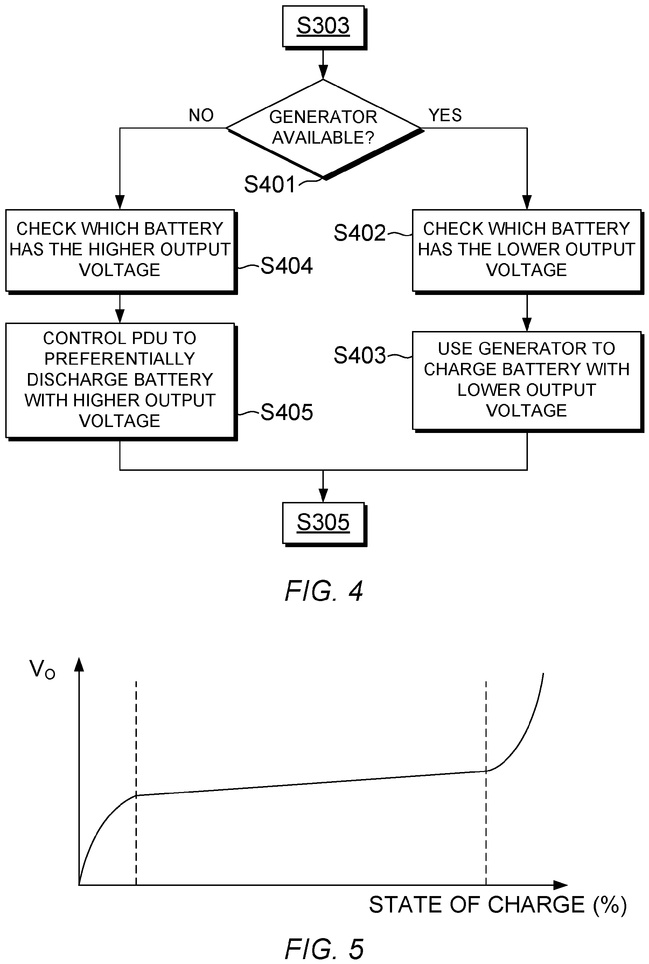

The voltage monitoring unit 203 can comprise any suitable means for monitoring an output voltage of the master battery 103 and an output voltage of the slave battery 104. For example, the master battery 103 and/or the slave battery 104 may include integrated voltage measuring equipment to measure the output voltage of the battery and report the output voltage to the voltage monitoring unit 203. Alternatively, the voltage monitoring unit 203 may be configured to directly measure the output voltage of one or both of the master and slave batteries 103, 104. As a further alternative, in some embodiments the master battery 103 and/or slave battery 104 may include a state of charge (SOC) monitoring unit configured to estimate the current SOC of the battery and transmit the estimated SOC to the voltage monitoring unit 203, which can then estimate the current output voltage of the battery from a known SOC-voltage curve, for example as plotted in Fig. 5.

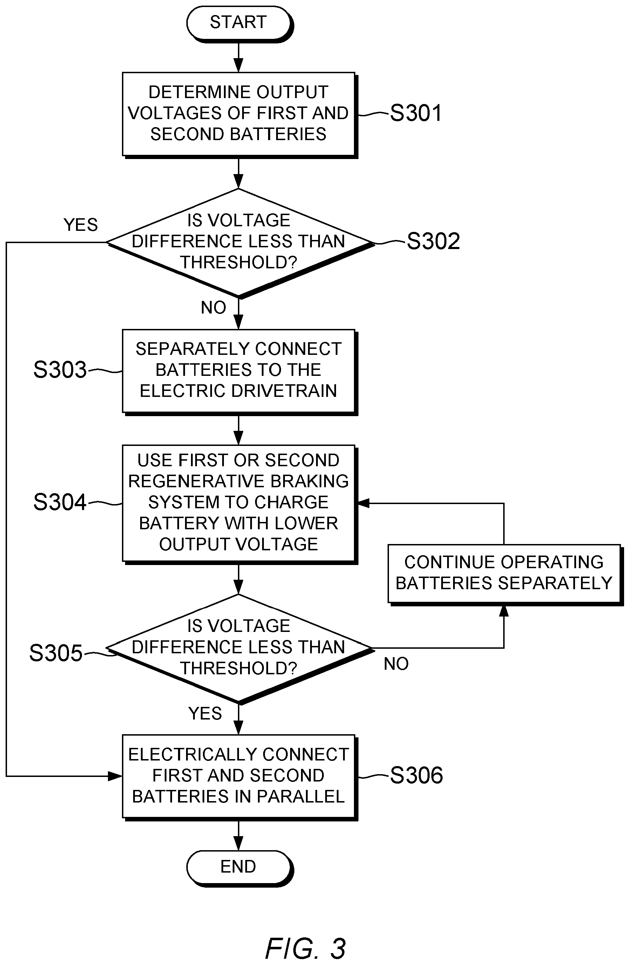

Referring now to Fig. 3, a battery management method is illustrated according to an embodiment of the present invention. The battery management method can be implemented by the battery management apparatus shown in Fig. 2. In the present embodiment the battery management method is implemented in software, and the battery control unit 106 comprises a processing unit 201 and non-volatile computer readable memory 202 adapted to store computer program instructions which, when executed by the processing unit 201, perform the battery management method. Any suitable type of computer memory may be used, and the processing unit 201 may include one or more processing cores. In other embodiments the battery management method may be implemented using dedicated hardware, for example an Application Specific Integrated Circuit (ASIC).

First, in step S301 the battery control unit 106 uses the voltage monitoring unit 203 to determine a difference between the output voltages of the master battery 103 and the slave battery 104. Then, in step S302 the battery control unit 106 checks whether the voltage difference is less than a preset threshold. The threshold can be set to a suitable limit below which the batteries can safely be connected in parallel. If the voltage difference is less than the threshold, then the battery control unit 106 proceeds directly to step S306 and controls the power distribution unit 107 to electrically connect the master battery 103 and the slave battery 104 in parallel to supply electrical power to the electric drivetrain 101, 102, by closing the switch 204 between the positive and negative battery terminals.

Alternatively, in response to a determination that the difference between the output voltages is greater than the threshold, in step S303 the battery control unit 106 proceeds to control the power distribution unit 107 to separately connect the master battery 103 and the slave battery 104 to the electric drivetrain 101, 102, by opening the switch 204. When a switching arrangement as shown in Fig. 2 is used, opening the switch 204 results in the master battery 103 only supplying power to the rear drivetrain 101 whilst the slave battery 104 only supplies power to the front drivetrain 102.

In this way, the battery control unit 106 can prevent the master and slave batteries 103, 104 from being electrically connected in parallel when the output voltages differ by more than a certain threshold, to prevent damage occurring to either battery or to other components of the electric vehicle 100. On the other hand, if the output voltages are close enough for the batteries to safely be connected in parallel, the battery control unit 106 automatically connects the batteries 103, 104 in parallel so as to minimise power losses in the electric vehicle 100.

In some embodiments, the battery management method may terminate at this point. In this way the battery control unit 106 effectively acts as a fail-safe mechanism, by preventing the batteries from being connected in parallel when it might be dangerous to do so. However, in the present embodiment the battery control unit 106 proceeds to actively manage the states of charge of the batteries if the voltage difference exceeds the threshold, so as to reduce the difference in the output voltages to a point at which the batteries can then be connected in parallel to minimise power losses.

As described above, the separate subsystems 108a, 108b of the regenerative braking system are configured to generate power under braking from different parts of the drivetrain 101, 102, and to supply power to different batteries in the electric vehicle.

According to the invention, the rear regenerative braking system 108a is configured to supply electrical power to the master battery 103 under braking of the electric vehicle 100 and the front regenerative braking system 108b is configured to supply electrical power to the slave battery 104 under braking of the electric vehicle 100.

Accordingly, in step S304 the battery control unit 106 controls the first and second regenerative braking system 108a, 108b to change the relative amount of electrical power generated by the first and second regenerative braking systems 108a, 108b so as to supply more electrical power to the battery which has the lower output voltage, while keeping the total amount of electrical power generated by the front and rear regenerative braking systems 108a, 108b under braking substantially constant. In this way, battery control unit 106 controls the power distribution unit 107 to charge or discharge the master battery 103 and/or the slave battery 104 so as to reduce the difference between the output voltages.

The regenerative braking system can influence the braking performance of the electric vehicle. By keeping the total amount of electrical power substantially constant, as described above, the battery control unit 106 can ensure that the vehicle 100 continues to provide consistent braking performance in line with the driver's expectations. If the total output of the regenerative braking system was reduced instead, the braking performance would be altered, potentially causing the driver to lose control of the vehicle.

The battery control unit 106 then periodically checks the voltage difference in step S305, and continues to charge or discharge the batteries as necessary whilst continuing to operate the batteries separately. Then, in response to the difference between the output voltages falling below the threshold at step S305, the battery control unit 106 finally proceeds to step S306 and controls the power distribution unit 107 to electrically connect the master and slave batteries 103, 104 in parallel.

Referring now to Fig. 4, a method of charging or discharging a battery to reduce the voltage difference between two batteries is illustrated, according to an embodiment of the present invention. The battery management method can be implemented by the battery management apparatus shown in Fig. 2, and can be performed during step S304 of the method shown in Fig. 3.

In the present embodiment, when it has been determined that the difference in output voltage between two batteries is too large for the batteries to safely be connected in parallel, the battery control unit 106 proceeds to check in step S401 whether any generating means is available. For example, in some embodiments a range extender unit 105 may be capable of being removed and therefore may not always be present, or a fuel tank for the range extender unit 105 may be running low or empty. Similarly, in some embodiments a regenerative braking system may not be included, or may be present but may not be available due to a malfunction.

If a generator is available, then in step S402 the battery control unit 106 proceeds to check which of the master and slave batteries 103, 104 currently provides the lower output voltage. Next, in step S403 the battery control unit 106 charges the battery with the lower output voltage from the generating means so as to increase the output voltage the battery, thereby reducing the difference in output voltages between the two batteries. For example, the battery control unit 106 may activate the range extender unit 105 and/or control the power distribution unit 107 to connect the battery to the regenerative braking system 108a, 108b. The battery control unit 106 then proceeds to check whether the difference in output voltages has fallen below the threshold, as described above with reference to step S305 of Fig. 3.

On the other hand, if a generator is not available in step S401, then in step S404 the battery control unit 106 checks which battery currently provides the higher output voltage. Then, in step S405 the battery control unit 107 controls the power distribution unit 107 so as to preferentially discharge the battery which has the higher output voltage. That is, the battery control unit 107 ensures that the battery with the higher output voltage is discharged more rapidly than the battery with the lower output voltage, which could be disconnected entirely from the drivetrain whilst the other battery is being discharged.

Furthermore, in some embodiments the battery control unit 106 may perform both branches of the flowchart in Fig. 4 simultaneously. For example, to rapidly reduce the voltage difference between two batteries, the battery with the lower output voltage may be charged from the range extender unit 105 and/or the regenerative braking system 108a, 108b, whilst the battery with the higher output voltage is connected to both front and rear drivetrains 101, 102 to rapidly discharge the battery.

Finally, embodiments of the invention have been described in which two batteries are electrically connected in parallel when the difference in output voltages is less than a threshold. In any given embodiment, the system may be capable of tolerating a certain finite imbalance between output voltages without damage occurring, and the threshold may be set accordingly. The threshold effectively defines an acceptable range within which the batteries can safely be electrically connected in parallel. To put it another way, the acceptable range is a range within which the output voltages of the master battery 103 and the secondary battery 104 are sufficiently close to allow the master battery 103 and the secondary battery 104 to be electrically connected in parallel, without damage occurring to either battery or to other components of the electric vehicle.

The threshold may be defined in absolute or relative terms. For example, the threshold may be defined as an absolute value, for instance 2 Volts (V). Alternatively the threshold may be defined in relative terms as a certain percentage or fraction of a voltage, for example 1%, 2% or 3% of the lower output voltage, the higher output voltage, or an average of the output voltages of any number of batteries that are to be connected. The battery management apparatus may cease actively managing the states of charge of the batteries as long as the difference between the output voltages remains within the defined acceptable threshold. If the difference between the output voltages subsequently becomes larger than the defined acceptable threshold, the battery management apparatus may resume active management of the state of charge of one or both batteries until the output voltage difference moves back within the acceptable threshold.

Whilst certain embodiments of the invention have been described herein with reference to the drawings, it will be understood that many variations and modifications will be possible without departing from the scope of the invention as defined in the accompanying claims.

## Claims

1. A battery management apparatus for an electric vehicle, the electric vehicle comprising a front electric drivetrain (102) comprising one or more electric motors, a rear electric drivetrain (101) comprising one or more electric motors, first and second batteries (103, 104) configured to supply electrical power to the front and rear electric drivetrains (101, 102), a first regenerative braking system (108a) configured to generate electrical power for charging the first battery (103), and a second regenerative braking system (108b) configured to generate electrical power for charging the second battery (104), the battery management apparatus comprising:
power distribution means (107) for controlling a flow of electrical power between the first and second batteries (103, 104) and the front and rear electric drivetrains (101, 102);
voltage monitoring means (203) for monitoring an output voltage of the first battery (103) and an output voltage of the second battery (104); and
battery control means (106) for controlling the power distribution means (107) to electrically connect the first and second batteries (103, 104) in parallel to supply electrical power to both the front and rear electric drivetrains (101, 102) in response to a difference between the output voltages of the first and second batteries (103, 104) being less than a threshold, and to separately connect the first battery (103) to the rear electric drivetrain (101) and the second battery (104) to the front electric drivetrain (102) in response to the difference between the output voltages being greater than the threshold,
wherein in response to the difference between the output voltages of the first and second batteries (103, 104) being greater than the threshold, the battery control means (106) is configured to change a relative amount of electrical power generated by the first and second regenerative braking systems (108a, 108b) so as to supply more electrical power to the one of the first and second batteries (103, 104) having the lower output voltage, without substantially changing the total amount of electrical power generated by the first and second regenerative braking systems (108a, 108b) under braking of the electric vehicle.

2. The battery management apparatus of claim 1, wherein in response to the difference between the output voltages of the first and second batteries (103, 104) being greater than the threshold, the battery control means (106) is configured to control the power distribution means (107) to charge or discharge the first battery (103) and/or the second battery (104) to reduce the difference between the output voltages, and to electrically connect the first and second batteries (103, 104) in parallel in response to the difference between the output voltages falling below the threshold.

3. The battery management apparatus of claim 1 or 2, wherein the first and second regenerative braking systems (108a, 108b) are configured to generate power from different parts of the front and rear electric drivetrains (101, 102).

4. The battery management apparatus of claim 3, wherein the rear electric drivetrain (101) comprises one or more electric motors configured to drive rear wheels of the electric vehicle, and
wherein the battery control means (106) is configured to determine which of the first and second batteries (103, 104) currently provides the higher output voltage out of the first and second batteries (103, 104), and to control the power distribution means (107) to supply electrical power to the rear electric drivetrain (101) from the one of the first and second batteries (103, 104) which provides the higher output voltage.

5. The battery management apparatus of any one of claims 1 to 3, wherein the battery control means (106) is configured to separately connect the first battery (103) and the second battery (104) to the front and rear electric drivetrains (101, 102) so that only one of the first and second batteries (103, 104) supplies electrical power to the front and rear electric drivetrains (101, 102) at any time.

6. An electric vehicle comprising:
a front electric drivetrain (102) comprising one or more electric motors;
a rear electric drivetrain (101) comprising one or more electric motors;
first and second batteries (103, 104) configured to supply electrical power to the front and rear electric drivetrains (101, 102);
a first and second regenerative braking system (108a, 108b); and
battery management apparatus according to any one of the preceding claims.

7. The electric vehicle of claim 6, further comprising:
a range extender unit (105) comprising an internal combustion engine configured to generate electrical power,
wherein the battery control means (106) is configured to determine which of the first and second batteries (103, 104) currently provides the lower output voltage out of the first and second batteries (103, 104), and to control the power distribution means (107) to charge said one of the first and second batteries (103, 104) from the range extender unit (105) to increase the output voltage of said one of the first and second batteries (103, 104).

8. A battery management method of an electric vehicle comprising a front electric drivetrain (102) comprising one or more electric motors, a rear electric drivetrain (101) comprising one or more electric motors, first and second batteries (103, 104) configured to supply electrical power to the front and rear electric drivetrains (101, 102), a first regenerative braking system (108a) configured to generate electrical power for charging the first battery (103), and a second regenerative braking system (108b) configured to generate electrical power for charging the second battery (104), the method comprising:
monitoring (S301) an output voltage of the first battery (103) and an output voltage of the second battery (104);
electrically connecting (S306) the first and second batteries (103, 104) in parallel to supply electrical power to both the front and rear electric drivetrains (101, 102) in response to a difference between the output voltages of the first and second batteries (103, 104) being less than a threshold; and
separately connecting (S303) the first battery (103) to the rear electric drivetrain (101) and the second battery (104) to the front electric drivetrain (102) in response to the difference between the output voltages being greater than the threshold,
wherein in response to the difference between the output voltages of the first and second batteries (103, 104) being greater than the threshold, the method further comprises:
changing (S304) a relative amount of electrical power generated by the first and second regenerative braking systems (108a, 108b) so as to supply more electrical power to the one of the first and second batteries (103, 104) having the lower output voltage, without substantially changing the total amount of electrical power generated by the first and second regenerative braking systems (108a, 108b) under braking of the electric vehicle.

9. The battery management method of claim 8, further comprising:
in response to the difference between the output voltages of the first and second batteries (103, 104) being greater than the threshold, charging (S403) or discharging (S405) the first battery (103) and/or the second battery (104) to reduce the difference between the output voltages; and
electrically connecting (S306) the first and second batteries (103, 104) in parallel in response to the difference between the output voltages falling below the threshold.

10. The battery management method of claim 8 or 9, wherein the first and second regenerative braking systems (108a, 108b) are configured to generate power from different parts of the front and rear electric drivetrains (101, 102),
wherein the rear electric drivetrain (101) comprises one or more electric motors configured to drive rear wheels of the electric vehicle, and the method further comprises:
determining which of the first and second batteries (103, 104) currently provides the higher output voltage out of the first and second batteries (103, 104); and
controlling the power distribution means (107) to supply electrical power to the rear electric drivetrain (101) from the one of the first and second batteries (103, 104) which provides the higher output voltage.

11. The battery management method of claim 8 or 9, wherein the first battery (103) and the second battery (104) are separately connected to the front and rear electric drivetrains (101, 102) so that only one of the first and second batteries (103, 104) supplies electrical power to the front and rear electric drivetrains (101, 102) at any time.

12. A program which, when executed by a processing unit (201), comprised in the battery control means (106) of a battery management apparatus according to any of claims 1-5, causes the processing unit (201) to perform a method according to any one of claims 8 to 11.

13. A non-volatile computer readable storage medium (202) adapted to store computer program instructions which, when executed by a processing unit (201) comprised in the battery control means (106) of a battery management apparatus according to any of claims 1-5, perform a method according to any one of claims 8 to 11.

## Patentansprüche

1. Batteriemanagementeinrichtung für ein Elektrofahrzeug, wobei das Elektrofahrzeug einen vorderen elektrischen Antriebsstrang (102), der einen oder mehrere Elektromotoren umfasst, einen hinteren elektrischen Antriebsstrang (101), der einen oder mehrere Elektromotoren umfasst, erste und zweite Batterien (103, 104), die dazu ausgelegt sind, elektrische Leistung zu den vorderen und hinteren elektrischen Antriebssträngen (101, 102) zu liefern, ein erstes regeneratives Bremssystem (108a), das dazu ausgelegt ist, elektrische Leistung zum Laden der ersten Batterie (103) zu erzeugen, und ein zweites regeneratives Bremssystem (108b), das dazu ausgelegt ist, elektrische Leistung zum Laden der zweiten Batterie (104) zu erzeugen, umfasst, wobei die Batteriemanagementeinrichtung Folgendes umfasst:
ein Leistungsverteilungsmittel (107) zum Steuern eines Flusses von elektrischer Leistung zwischen den ersten und zweiten Batterien (103, 104) und den vorderen und hinteren elektrischen Antriebssträngen (101, 102);
ein Spannungsüberwachungsmittel (203) zum Überwachen einer Ausgangsspannung der ersten Batterie (103) und einer Ausgangsspannung der zweiten Batterie (104); und
ein Batteriesteuermittel (106) zum Steuern des Leistungsverteilungsmittels (107), um die ersten und zweiten Batterien (103, 104) parallel elektrisch zu verbinden, um elektrische Leistung zu beiden der vorderen und hinteren elektrischen Antriebsstränge (101, 102) in Reaktion darauf zu liefern, dass eine Differenz zwischen den Ausgangsspannungen der ersten und zweiten Batterien (103, 104) kleiner als ein Schwellenwert ist, und um die erste Batterie (103) mit dem hinteren elektrischen Antriebsstrang (101) und die zweite Batterie (104) mit dem vorderen elektrischen Antriebsstrang (102) in Reaktion darauf separat zu verbinden, dass die Differenz zwischen den Ausgangsspannungen größer als der Schwellenwert ist,
wobei in Reaktion darauf, dass die Differenz zwischen den Ausgangsspannungen der ersten und zweiten Batterien (103, 104) größer als der Schwellenwert ist, das Batteriesteuermittel (106) dazu ausgelegt ist, eine relative Menge an durch die ersten und zweiten regenerativen Bremssysteme (108a, 108b) erzeugter elektrischer Leistung derart zu ändern, dass mehr elektrische Leistung zu der einen der ersten und zweiten Batterien (103, 104) geliefert wird, die die niedrigere Ausgangsspannung aufweist, ohne die Gesamtmenge an durch die ersten und zweiten regenerativen Bremssysteme (108a, 108b) bei einer Bremsung des Elektrofahrzeugs erzeugter elektrischer Leistung deutlich zu ändern.

2. Batteriemanagementeinrichtung nach Anspruch 1, wobei in Reaktion darauf, dass die Differenz zwischen den Ausgangsspannungen der ersten und zweiten Batterien (103, 104) größer als der Schwellenwert ist, das Batteriesteuermittel (106) dazu ausgelegt ist, das Leistungsverteilungsmittel (107) zu steuern, um die erste Batterie (103) und/oder die zweite Batterie (104) zu laden oder zu entladen, um die Differenz zwischen den Ausgangsspannungen zu reduzieren, und um die ersten und zweiten Batterien (103, 104) in Reaktion darauf parallel elektrisch zu verbinden, dass die Differenz zwischen den Ausgangsspannungen unter den Schwellenwert fällt.

3. Batteriemanagementeinrichtung nach Anspruch 1 oder 2, wobei die ersten und zweiten regenerativen Bremssysteme (108a, 108b) dazu ausgelegt sind, Leistung von unterschiedlichen Teilen der vorderen und hinteren elektrischen Antriebsstränge (101, 102) zu erzeugen.

4. Batteriemanagementeinrichtung nach Anspruch 3, wobei der hintere elektrische Antriebsstrang (101) einen oder mehrere Elektromotoren umfasst, die dazu ausgelegt sind, Hinterräder des Elektrofahrzeugs anzutreiben, und
wobei das Batteriesteuermittel (106) dazu ausgelegt ist, zu bestimmen, welche der ersten und zweiten Batterien (103, 104) derzeit die höhere Ausgangsspannung aus den ersten und zweiten Batterien (103, 104) bereitstellt, und das Leistungsverteilungsmittel (107) zu steuern, um elektrische Leistung zu dem hinteren elektrischen Antriebsstrang (101) von der einen der ersten und zweiten Batterien (103, 104), die die höhere Ausgangsspannung bereitstellt, zu liefern.

5. Batteriemanagementeinrichtung nach einem der Ansprüche 1 bis 3, wobei das Batteriesteuermittel (106) dazu ausgelegt ist, die erste Batterie (103) und die zweite Batterie (104) mit den vorderen und hinteren elektrischen Antriebssträngen (101, 102) derart separat zu verbinden, dass jederzeit nur eine der ersten und zweiten Batterien (103, 104) elektrische Leistung zu den vorderen und hinteren elektrischen Antriebssträngen (101, 102) liefert.

6. Elektrofahrzeug, das Folgendes umfasst:
einen vorderen elektrischen Antriebsstrang (102), der einen oder mehrere Elektromotoren umfasst;
einen hinteren elektrischen Antriebsstrang (101), der einen oder mehrere Elektromotoren umfasst;
erste und zweite Batterien (103, 104), die dazu ausgelegt sind, elektrische Leistung zu den vorderen und hinteren elektrischen Antriebssträngen (101, 102) zu liefern;
ein erstes und zweites regeneratives Bremssystem (108a, 108b); und
eine Batteriemanagementeinrichtung nach einem der vorhergehenden Ansprüche.

7. Elektrofahrzeug nach Anspruch 6, das ferner Folgendes umfasst:
eine Reichweitenverlängerungseinheit (105), die eine Brennkraftmaschine umfasst, die dazu ausgelegt ist, elektrische Leistung zu erzeugen,
wobei das Batteriesteuermittel (106) dazu ausgelegt ist, zu bestimmen, welche der ersten und zweiten Batterien (103, 104) derzeit die niedrigere Ausgangsspannung aus den ersten und zweiten Batterien (103, 104) bereitstellt, und das Leistungsverteilungsmittel (107) zu steuern, um die eine der ersten und zweiten Batterien (103, 104) von der Reichweitenverlängerungseinheit (105) zu laden, um die Ausgangsspannung der einen der ersten und zweiten Batterien (103, 104) zu erhöhen.

8. Batteriemanagementverfahren eines Elektrofahrzeugs, das einen vorderen elektrischen Antriebsstrang (102), der einen oder mehrere Elektromotoren umfasst, einen hinteren elektrischen Antriebsstrang (101), der einen oder mehrere Elektromotoren umfasst, erste und zweite Batterien (103, 104), die dazu ausgelegt sind, elektrische Leistung zu den vorderen und hinteren elektrischen Antriebssträngen (101, 102) zu liefern, ein erstes regeneratives Bremssystem (108a), das dazu ausgelegt ist, elektrische Leistung zum Laden der ersten Batterie (103) zu erzeugen, und ein zweites regeneratives Bremssystem (108b), das dazu ausgelegt ist, elektrische Leistung zum Laden der zweiten Batterie (104) zu erzeugen, umfasst, wobei das Verfahren Folgendes umfasst:
Überwachen (S301) einer Ausgangsspannung der ersten Batterie (103) und einer Ausgangsspannung der zweiten Batterie (104);
elektrisches Verbinden (S306) der ersten und zweiten Batterien (103, 104) parallel, um elektrische Leistung zu beiden der vorderen und hinteren elektrischen Antriebsstränge (101, 102) in Reaktion darauf zu liefern, dass eine Differenz zwischen den Ausgangsspannungen der ersten und zweiten Batterien (103, 104) kleiner als ein Schwellenwert ist; und
separates Verbinden (S303) der ersten Batterie (103) mit dem hinteren elektrischen Antriebsstrang (101) und der zweiten Batterie (104) mit dem vorderen elektrischen Antriebsstrang (102) in Reaktion darauf, dass die Differenz zwischen den Ausgangsspannungen größer als der Schwellenwert ist,
wobei in Reaktion darauf, dass die Differenz zwischen den Ausgangsspannungen der ersten und zweiten Batterien (103, 104) größer als der Schwellenwert ist, das Verfahren ferner Folgendes umfasst:
Ändern (S304) einer relativen Menge an durch die ersten und zweiten regenerativen Bremssysteme (108a, 108b) erzeugter elektrischer Leistung derart, dass mehr elektrische Leistung zu der einen der ersten und zweiten Batterien (103, 104) geliefert wird, die die niedrigere Ausgangsspannung aufweist, ohne die Gesamtmenge an durch die ersten und zweiten regenerativen Bremssysteme (108a, 108b) bei einer Bremsung des Elektrofahrzeugs erzeugter elektrischer Leistung deutlich zu ändern.

9. Batteriemanagementverfahren nach Anspruch 8, das ferner Folgendes umfasst:
in Reaktion darauf, dass die Differenz zwischen den Ausgangsspannungen der ersten und zweiten Batterien (103, 104) größer als der Schwellenwert ist, Laden (S403) oder Entladen (S405) der ersten Batterie (103) und/oder der zweiten Batterie (104), um die Differenz zwischen den Ausgangsspannungen zu reduzieren; und
elektrisches Verbinden (S306) der ersten und zweiten Batterien (103, 104) parallel in Reaktion darauf, dass die Differenz zwischen den Ausgangsspannungen unter den Schwellenwert fällt.

10. Batteriemanagementverfahren nach Anspruch 8 oder 9, wobei die ersten und zweiten regenerativen Bremssysteme (108a, 108b) dazu ausgelegt sind, Leistung von unterschiedlichen Teilen der vorderen und hinteren elektrischen Antriebsstränge (101, 102) zu erzeugen,
wobei der hintere elektrische Antriebsstrang (101) einen oder mehrere Elektromotoren umfasst, die dazu ausgelegt sind, Hinterräder des Elektrofahrzeugs anzutreiben, und wobei das Verfahren ferner Folgendes umfasst:
Bestimmen, welche der ersten und zweiten Batterien (103, 104) derzeit die höhere Ausgangsspannung aus den ersten und zweiten Batterien (103, 104) bereitstellt; und
Steuern des Leistungsverteilungsmittels (107), um elektrische Leistung zu dem hinteren elektrischen Antriebsstrang (101) von der einen der ersten und zweiten Batterien (103, 104), die die höhere Ausgangsspannung bereitstellt, zu liefern.

11. Batteriemanagementverfahren nach Anspruch 8 oder 9, wobei die erste Batterie (103) und die zweite Batterie (104) mit den vorderen und hinteren elektrischen Antriebssträngen (101, 102) derart separat verbunden werden, dass jederzeit nur eine der ersten und zweiten Batterien (103, 104) elektrische Leistung zu den vorderen und hinteren elektrischen Antriebssträngen (101, 102) liefert.

12. Programm, das, wenn es durch eine Verarbeitungseinheit (201) ausgeführt wird, die in dem Batteriesteuermittel (106) einer Batteriemanagementeinrichtung nach einem der Ansprüche 1-5 enthalten ist, die Verarbeitungseinheit (201) dazu veranlasst, ein Verfahren nach einem der Ansprüche 8 bis 11 durchzuführen.

13. Nichtflüchtiges computerlesbares Speichermedium (202), das dazu ausgestaltet ist, Computerprogrammanweisungen zu speichern, die, wenn sie durch eine Verarbeitungseinheit (201) ausgeführt werden, die in dem Batteriesteuermittel (106) einer Batteriemanagementeinrichtung nach einem der Ansprüche 1-5 enthalten ist, ein Verfahren nach einem der Ansprüche 8 bis 11 durchführen.

## Revendications

1. Appareil de gestion de batteries pour un véhicule électrique, le véhicule électrique comprenant une chaîne cinématique électrique avant (102) comprenant un ou plusieurs moteurs électriques, une chaîne cinématique électrique arrière (101) comprenant un ou plusieurs moteurs électriques, des première et deuxième batteries (103, 104) configurées pour fournir de l'énergie électrique aux chaînes cinématiques électriques avant et arrière (101, 102), un premier système de freinage régénératif (108a) configuré pour générer de l'énergie électrique pour charger la première batterie (103) et un deuxième système de freinage régénératif (108b) configuré pour générer de l'énergie électrique pour charger la deuxième batterie (104), l'appareil de gestion de batteries comprenant :
un moyen de répartition d'énergie (107) pour commander un flux d'énergie électrique entre les première et deuxième batteries (103, 104) et les chaînes cinématiques électriques avant et arrière (101, 102) ;
un moyen de surveillance de tensions (203) pour surveiller une tension de sortie de la première batterie (103) et une tension de sortie de la deuxième batterie (104) ; et
un moyen de commande de batteries (106) pour commander au moyen de répartition d'énergie (107) de connecter électriquement les première et deuxième batteries (103, 104) en parallèle pour fournir de l'énergie électrique simultanément aux première et deuxième chaînes cinématiques électriques avant et arrière (101, 102) dès lors qu'une différence entre les tensions de sortie des première et deuxième batteries (103, 104) est inférieure à un seuil, et pour connecter séparément la première batterie (103) à la chaîne cinématique électrique arrière (101) et la deuxième batterie (104) à la chaîne cinématique électrique avant (102) dès lors que la différence entre les tensions de sortie est supérieure au seuil,
dès lors que la différence entre les tensions de sortie des première et deuxième batterie (103, 104) est supérieure au seuil, le moyen de commande de batteries (106) étant configuré pour modifier une quantité relative d'énergie électrique générée par les premier et deuxième systèmes de freinage régénératif (108a, 108b) de manière à fournir davantage d'énergie électrique à celle des première et deuxième batteries (103, 104) dont la tension de sortie est la plus faible, sans modifier sensiblement la quantité totale d'énergie électrique générée par les premier et deuxième systèmes de freinage régénératif (108a, 108b) lors du freinage du véhicule électrique.

2. Système de gestion de batteries selon la revendication 1, dans lequel, dès lors que la différence entre les tensions de sortie des première et deuxième batteries (103, 104) est supérieure au seuil, le moyen de commande de batteries (106) est configuré pour commander au moyen de répartition d'énergie (107) de charger ou de décharger la première batterie (103) et/ou la deuxième batterie (104) dans le but de réduire la différence entre les tensions de sortie, et pour connecter électriquement les première et deuxième batteries (103, 104) en parallèle dès lors que la différence entre les tensions de sortie passe sous le seuil.

3. Appareil de gestion de batteries selon la revendication 1 ou 2, dans lequel les premier et deuxième systèmes de freinage régénératif (108a, 108b) sont configurés pour générer de l'énergie à partir de différents composants des chaînes cinématiques électriques avant et arrière (101, 102).

4. Appareil de gestion de batteries selon la revendication 3, dans lequel la chaîne cinématique électrique arrière (101) comprend un ou plusieurs moteurs électriques configurés pour entraîner des roues arrière du véhicule électrique, et
dans lequel le moyen de commande de batteries (106) est configuré pour déterminer laquelle des première et deuxième batteries (103, 104) fournit actuellement la tension de sortie la plus élevée parmi les première et deuxième batteries (103, 104), et pour commander au moyen de répartition d'énergie (107) de fournir de l'énergie électrique à la chaîne cinématique électrique arrière (101) à partir de celle des première et deuxième batteries (103, 104) qui fournit la tension de sortie la plus élevée.

5. Appareil de gestion de batteries selon l'une quelconque des revendications 1 à 3, dans lequel le moyen de commande de batteries (106) est configuré pour connecter séparément la première batterie (103) et la deuxième batterie (104) aux chaînes cinématiques électriques avant et arrière (101, 102) de sorte qu'à tout moment, une seule des première et deuxième batteries (103, 104) fournisse de l'énergie électrique aux chaînes cinématiques électriques avant et arrière (101, 102).

6. Véhicule électrique, comprenant :
une chaîne cinématique électrique avant (102) comprenant un ou plusieurs moteurs électriques ;
une chaîne cinématique électrique arrière (101) comprenant un ou plusieurs moteurs électriques ;
des première et deuxième batteries (103, 104) configurées pour fournir de l'énergie électrique aux chaînes cinématiques électriques avant et arrière (101, 102) ;
un premier et un deuxième système de freinage régénératif (108a, 108b) ; et
un appareil de gestion de batteries selon l'une quelconque des revendications précédentes.

7. Véhicule électrique selon la revendication 6, comprenant en outre :
une unité de prolongation d'autonomie (105) comprenant un moteur à combustion interne configuré pour générer de l'énergie électrique,
le moyen de commande de batteries (106) étant configuré pour déterminer laquelle des première et deuxième batteries (103, 104) fournit actuellement la tension de sortie la plus faible parmi les première et deuxième batteries (103, 104), et pour commander au moyen de répartition d'énergie (107) de charger ladite une des première et deuxième batteries (103, 104) à partir de l'unité de prolongation d'autonomie (105) dans le but d'augmenter la tension de sortie de ladite une des première et deuxième batteries (103, 104).

8. Procédé de gestion de batteries pour un véhicule électrique comprenant une chaîne cinématique électrique avant (102) comprenant un ou plusieurs moteurs électriques, une chaîne cinématique électrique arrière (101) comprenant un ou plusieurs moteurs électriques, des première et deuxième batteries (103, 104) configurées pour fournir de l'énergie électrique aux chaînes cinématiques électriques avant et arrière (101, 102), un premier système de freinage régénératif (108a) configuré pour générer de l'énergie électrique pour charger la première batterie (103) et un deuxième système de freinage régénératif (108b) configuré pour générer de l'énergie électrique pour charger la deuxième batterie (104), le procédé comprenant :
la surveillance (S301) d'une tension de sortie de la première batterie (103) et d'une tension de sortie de la deuxième batterie (104) ;
la connexion électrique (S306) des première et deuxième batteries (103, 104) en parallèle pour fournir de l'énergie électrique simultanément aux première et deuxième chaînes cinématiques électriques avant et arrière (101, 102) dès lors qu'une différence entre les tensions de sortie des première et deuxième batteries (103, 104) est inférieure à un seuil ; et
la connexion séparée (S303) de la première batterie (103) à la chaîne cinématique électrique arrière (101) et de la deuxième batterie (104) à la chaîne cinématique électrique avant (102) dès lors que la différence entre les tensions de sortie est supérieure au seuil,
dès lors que la différence entre les tensions de sortie des première et deuxième batterie (103, 104) est supérieure au seuil, le procédé comprenant en outre :
la modification (S304) d'une quantité relative d'énergie électrique générée par les premier et deuxième systèmes de freinage régénératif (108a, 108b) de manière à fournir davantage d'énergie électrique à celle des première et deuxième batteries (103, 104) dont la tension de sortie est la plus faible, sans modification sensible de la quantité totale d'énergie électrique générée par les premier et deuxième systèmes de freinage régénératif (108a, 108b) lors du freinage du véhicule électrique.

9. Procédé de gestion de batteries selon la revendication 8, comprenant en outre :
dès lors que la différence entre les tensions de sortie des première et deuxième batteries (103, 104) est supérieure au seuil, la charge (S403) ou la décharge (S405) de la première batterie (103) et/ou de la deuxième batterie (104) dans le but de réduire la différence entre les tensions de sortie ; et
la connexion électrique (S306) des première et deuxième batteries (103, 104) en parallèle dès lors que la différence entre les tensions de sortie passe sous le seuil.

10. Procédé de gestion de batteries selon la revendication 8 ou 9, dans lequel les premier et deuxième systèmes de freinage régénératif (108a, 108b) sont configurés pour générer de l'énergie à partir de différents composants des chaînes cinématiques électriques avant et arrière (101, 102),
la chaîne cinématique électrique arrière (101) comprenant un ou plusieurs moteurs électriques configurés pour entraîner des roues arrière du véhicule électrique, et le procédé comprenant en outre :
la détermination de laquelle des première et deuxième batteries (103, 104) fournit actuellement la tension de sortie la plus élevée parmi les première et deuxième batteries (103, 104) ; et
la commande au moyen de répartition d'énergie (107) de fournir de l'énergie électrique à la chaîne cinématique électrique arrière (101) à partir de celle des première et deuxième batteries (103, 104) qui fournit la tension de sortie la plus élevée.

11. Procédé de gestion de batteries selon la revendication 8 ou 9, dans lequel la première batterie (103) et la deuxième batterie (104) sont connectées séparément aux chaînes cinématiques électriques avant et arrière (101, 102) de sorte qu'à tout moment, une seule des première et deuxième batteries (103, 104) fournisse de l'énergie électrique aux chaînes cinématiques électriques avant et arrière (101, 102).

12. Programme qui, lorsqu'il est exécuté par une unité de traitement (201), contenue dans le moyen de commande de batteries (106) d'un appareil de gestion de batteries selon l'une quelconque des revendications 1 à 5, amène l'unité de traitement (201) à réaliser un procédé selon l'une quelconque des revendications 8 à 11.

13. Support de stockage non volatil (202) lisible par ordinateur adapté à stocker des instructions de programme d'ordinateur qui, lorsqu'elles sont exécutées par une unité de traitement (201) contenue dans le moyen de commande de batteries (106) d'un appareil de gestion de batteries selon l'une quelconque des revendications 1 à 5, réalisent un procédé selon l'une quelconque des revendications 8 à 11.
